# EUROPÄISCHE PATENTSCHRIFT

(11) **EP 1 732 861 B1**
(45) Veröffentlichungstag und Bekanntmachung des Hinweises auf die Patenterteilung: **24.08.2016**
(21) Anmeldenummer: 05718351.9
(22) Anmeldetag: 05.04.2005
(51) Int. Cl.: C04B 28/06, C04B 7/21

(54) **HYDRAULISCHES BINDEMITTEL**
HYDRAULIC BINDER
LIANT HYDRAULIQUE

(30) Priorität: 05.04.2004 AT 6002004
(43) Veröffentlichungstag der Anmeldung: 20.12.2006
(73) Patentinhaber: Holcim Technology Ltd., 8645 Jona (CH)
(72) Erfinder: KO, Suz-Chung, CH-5600 Lenzburg (CH); ADLER, Michael, CH-3034 Murzelen (CH); GEBAUER, Juraj, CH-5106 Veltheim (CH)
(74) Vertreter: Keschmann, Marc
(86) Internationale Anmeldenummer: PCT/IB2005/000877
(87) Internationale Veröffentlichungsnummer: WO 2005/097700

(56) Entgegenhaltungen:
- WO-A-00/00447
- US-A1- 2003 167 972

## Beschreibung

Die Erfindung bezieht sich auf ein hydraulisches Bindemittel enthaltend Schlacken, Aluminiumsilikate und Kalziumsulfat.

Die Zusammensetzung und Herstellung von supersulfatiertem Hüttenzement basiert auf der Zugabe von Calciumsulfat zum Zement. Gemäß der Internationalen Normungsorganisation (ISO) ist supersulfatierter Zement als Mischung von mindestens 75 Gew.% zerkleinerter granulierter Hochofenschlacke, großen Zusätzen von Calciumsulfat (> 5 Gew.% SO₃) und maximal 5 Gew.% gelöschtem Kalk, Portlandzementklinker oder Portlandzement definiert.

Zur Herstellung von supersulfatiertem Zement muss die granulierte Schlacke gemäß der deutschen Norm mindestens 13 Gew.% Al₂O₃ enthalten und der Formel (CaO + MgO + Al₂O₃)/SiO₂ > 1,6 entsprechen. Nach Keil wird eine Menge von 15 bis 20 % Tonerdeschlacke mit einem Mindestmodulus von (CaO + CaS + 0,5 MgO + Al₂O₃)/(SiO₂ + MnO) > 1,8 bevorzugt. Gemäß Blondiau muss das CaO/SiO₂-Verhältnis zwischen 1,45 und 1,54 und das Al₂O₃/SiO₂-Verhältnis zwischen 1,8 und 1,9 betragen.

Kalk, Klinker oder Zement wird zugesetzt, um den pH-Wert in der Zementpaste zu erhöhen und die Auflöslichkeit von Tonerderde in der flüssigen Phase während der Hydratisierung des Zements zu erleichtern. Die Härtung von supersulfatiertem Hüttenzement kann ohne chemische Zusätze oder eine spezielle Formungsbehandlung erfolgen.

Die US-5 626 665 offenbart ein Mischpuzzolan zur Verwendung mit Portlandzement zur Herstellung eines zementartigen Systems. Das Mischpuzzolan enthält gebrannten Ton und mindestens einen Bestandteil ausgewählt aus der Gruppe bestehend aus etwa 2% bis etwa 30% Gips, etwa 0% bis etwa 25% hydratisiertem Ofenstaub, etwa 0% bis etwa 20% hydratisiertem Kalk, etwa 0% bis etwa 20% hydratisiertem Kalkofenstaub, etwa 0% bis etwa 50% Flugasche und etwa 0% bis etwa 5% organischem Plastifika**BESTÄTIGUNGSKOPIE** tor. Der gebrannte Kalk ist in ausreichenden Mengen vorhanden, um ein Mischpuzzolan mit einem Endsummengewicht von 100% zu ergeben. Das Mischpuzzolan wird mit dem Portlandzement in einem Gewichtsverhältnis von etwa 1:20 bis etwa 1:1, vorzugsweise etwa 1:2 bis etwa 1:3, vermischt.

In gewöhnlichen Portlandzementen und Hüttenzementen, bei denen die Hydratisierung in flüssiger Phase frei von in Lösung befindlicher Tonerde stattfindet, ist der Gehalt an Calciumsulfat auf einen niedrigen Prozentsatz beschränkt, um einen eventuellen inneren Zerfall aufgrund der Bildung von Calciumsulfoaluminat (Candlot bacilli) als Folge der nicht in Lösung gegangenen Tonerde zu vermeiden. In diesen Zementen besteht der Haupteinfluss von Calciumsulfat in der Verzögerungswirkung, die es auf die Abbindezeit ausübt. Die Basizität der hydratisierten Calciumaluminate sowie die Unlöslichkeit der in den Aluminaten enthaltenen Tonerde hängt von der Kalkkonzentration in der flüssigen Phase des Zements während der Hydratisierung ab, und zwar unabhängig davon, ob die hydratisierten Calcium-aluminate im gehärteten Zement in kristalliner Form oder in amorpher Form vorliegen. Die Kalkkonzentration in der flüssigen Phase bestimmt die Art des Einflusses des Calciumsulfats auf die Abbindezeit des Zements und die maximale Calciumsulfatmenge, die der Zement enthalten kann, ohne dass es zu einem inneren Zerfall durch zeitversetzte Ettringitbildung kommt.

In supersulfatiertem Hüttenzement liegt die Kalkkonzentration in der flüssigen Phase unter der Unlöslichkeitsgrenze der Tonerde. Größere Zugaben von Calciumsulfat zwecks Aktivierung der Reaktionen von Hochofenschlacke bestimmen die Bildung von Tricalciumsulfoaluminat mit hoher hydraulischer Aktivität auf Basis des in Lösung befindlichen Kalks und der in Lösung befindlichen Tonerde, ohne zu einem eventuellen Zerfall zu führen. Die Zugabe von Calciumsulfat zu granulierter Hochofenschlacke erzeugt keinen Expansionszement, sondern wirkt als Beschleunigungsmittel bei der Bildung von hydratisierten Bestandteilen. In supersulfatiertem Zement sind größere Anteile an Calciumsulfat nicht als störend anzusehen. Die Tricalciumsulfoaluminate, zu denen sie führen, tragen vielmehr zu einer Erhöhung der hydraulischen Aktivität bei, anstatt einen Zerfall zu bewirken, wie es bei Portlandzement und normalem Hüttenzement der Fall ist.

Das anfängliche Abbinden und Aushärten von supersulfatiertem Zement geht Hand in Hand mit der Bildung der Hochsulfatform von Calciumsulfoaluminat aus den Schlackenkomponenten und dem zugesetzten Calciumsulfat. Die Zugabe von Portlandzement zu Zement ist zur Einstellung der richtigen Alkalinität erforderlich, damit die Bildung von Ettringit ermöglicht wird. Die wichtigsten Hydratisierungsprodukte sind die Mono- und Trisulfoaluminattobermorit-ähnliche Phase und Tonerde.

Supersulfatierter Zement verbindet sich bei der Hydratisierung mit mehr Wasser als Portlandzement. Er erfüllt alle Normvorschriften von Zement hinsichtlich Mahlfeinheit. Er wird als Zement mit niedrigem Heizwert angesehen. Wie jeder andere Portland- oder Hüttenzement kann er in Form von Beton, Verputzmörtel oder Fugenmörtel verwendet werden. Die bei der Verwendung von supersulfatiertem Zement zu beachtenden Bedingungen sind identisch mit jenen, die bei der Auswahl, der Mischung und dem Auftrag von anderen Zementen maßgebend sind.

Zur Verbesserung von Aluminosilicat-Bindemitteln wurde bereits vorgeschlagen, diese mit Alkali und insbesondere Sodalauge oder Ätzkalilauge zu aktivieren.

Alkali aktivierte Aluminosilicat-Bindemittel (AAAS) sind zementartige Materialien, die durch Umsetzung von feinen Silika- und Tonerdefeststoffen mit einer Alkali- oder Alkalisalzlösung zur Herstellung von Gelen und kristallinen Verbindungen gebildet werden. Die Technologie der Alkaliaktivierung wurde ursprünglich 1930 bis 1940 von Purdon entwickelt, der entdeckt hatte, dass die Zugabe von Alkali zu Schlacke ein rasch härtendes Bindemittel liefert.

Im Gegensatz zu supersulfatiertem Zement kann eine große Vielfalt von Materialien (natürlicher oder gebrannter Ton, Schlacke, Flugasche, Belitschlämme, gemahlener Stein, etc.) als Quelle für Aluminosilicatmaterialien herangezogen werden. Verschiedene Alkalilösungen können zur Erzeugung von Härtungsreaktionen verwendet werden (Alkalihydroxid, Silicat, Sulfat und Carbonat, etc.). Das bedeutet, dass die Quellen für AAAS-Bindemitteln nahezu unbegrenzt sind.

Während der Alkaliaktivierung wirkt eine hohe Konzentration von OH-Ionen in der Mischung auf die Aluminosilicate. Während in Portland- oder supersulfatierter Zementpaste aufgrund der Löslichkeit von Calciumhydroxid ein pH > 12 erzeugt wird, liegt der pH-Wert im AAAS-System über 13,5. Die Menge an Alkali, die im Allgemeinen 2 bis 25 Gew.% Alkali (> 3% Na₂O) beträgt, hängt von der Alkalinität der Aluminosilicate ab.

Die Reaktivität eines AAAS-Bindemittels hängt von seiner chemischen und mineralischen Zusammensetzung, dem Verglasungsgrad und der Mahlfeinheit ab. Im Allgemeinen können AAAS-Bindemittel innerhalb von 15 Minuten mit dem Abbinden beginnen und bieten auf lange Sicht eine rasche Aushärtung und einen starken Festigkeitszuwachs. Die Abbindereaktion und der Härtungsprozess sind nach wie vor nicht ganz klar. Sie gehen mit der anfänglichen Auslaugung von Alkali und der Bildung von schwach kristallinen Calciumhydrosilicaten der Tobermoritgruppe vor sich. Calciumaluminosilicate beginnen zu kristallisieren, um zeolitartige Produkte und in der Folge Alkalizeolite zu bilden.

Die Festigkeitswerte im AAAS-System werden dem starken Kristallisationskontakt zwischen Zeoliten und Calciumhydrosilicaten zugeschrieben. Die hydraulische Aktivität wird durch eine Erhöhung der Alkalidosen verbessert. Die Beziehung zwischen der hydraulischen Aktivität und der Alkalimenge sowie der Anwesenheit von Zeolit in den hydratisierten Produkten hat gezeigt, dass Alkali nicht nur als einfache Katalysatoren wirken, sondern an Reaktionen auf dieselbe Weise wie Kalk und Gips teilnehmen und aufgrund eines starken Kationeneinflusses eine relativ hohe Festigkeit aufweisen.

Es wurde von vielen Studien betreffend die Aktivierung von Silicoaluminatmaterialien mit Alkali und ihren Salzen berichtet.

In der WO 00/00447 wurde bereits ein supersulfatiertes hydraulisches Bindemittel vorgeschlagen, bei welchem Kalziumsulfat in Mengen von über 5 Gew.% eingesetzt wurde. Neben Aluminiumsilikaten, unter welchen bei der Definition der WO 00/00447 auch Hochofenschlacke subsumiert wurde, war es bei der vorbekannten Ausbildung des hydraulischen Bindemittels wesentlich, dass Zementofenstaub in Mengen von 3 bis 10 Gew.% als Aktivator zugesetzt wurde. Weiters war es bei dieser vorbekannten Ausbildung wesentlich, dass wenigstens 35 Gew.% Hochofenschlacke eingesetzt wurde, um entsprechende Frühfestigkeitswerte sicherstellen zu können. Insgesamt ergab sich jedoch eine relativ niedrige Frühfestigkeit bei abnehmendem Hochofenschlackengehalt, wobei gleichzeitig bedingt durch den Zusatz von Zementofenstaub der Wasser/Zement Faktor anstieg und die Gefahr eines Schwindens und damit einer Rissbildung zunahm.

Die Erfindung zielt nun darauf ab, höhere Mengen an Hochofenschlacke durch von Hochofenschlacke verschiedene Aluminiumsilikate, wie beispielsweise Flugasche, zu ersetzen und gleichzeitig eine verbesserte Frühfestigkeit und ein verbessertes Schwindungsverhalten mit einer verringerten Neigung zur Rissbildung zu erzielen.

Zur Lösung dieser Aufgabe besteht das erfindungsgemäße hydraulische Bindemittel im Wesentlichen darin, dass Schlacke, insbesondere Hochofenschlacke, in Mengen von 7 bis 50 Gew.% sowie von Hochofenschlacke verschiedene Aluminiumsilikate, vorzugsweise Flugasche und natürliche Aluminiumsilikate, vorzugsweise Basalt oder Andesit, in Mengen von 5 Gew.% bis 75 Gew.% mit der Maßgabe, dass die Summe von Schlacke und Aluminiumsilikaten zwischen 82 und 95,9 Gew.% beträgt, und CaSO₄ in Mengen zwischen 4 und 15 Gew.% vorliegt und dass zusätzlich Alkaliaktivatoren, insbesondere Alkalihydroxide und/oder -karbonate von Na und/oder K in Mengen von 0,1 bis 3 Gew.% eingesetzt sind, dadurch gekennzeichnet, dass als Abbindebeschleuniger Portlandzementklinker in Mengen zwischen 0,1 und 5 Gew. % eingesetzt ist. . Erfindungsgemäß kann auf den Zusatz von Zementofenstaub zur Gänze verzichtet werden, wodurch der Wasser/Zement Faktor verringert werden kann und das Risiko von Rissbildungen minimiert werden kann. Ein entsprechend geringer Zusatz eines Alkaliaktivators führt zu überaus günstigen Frühfestigkeitswerten, wobei im Fall der Verwendung von Zementofenstaub als Alkaliaktivator ebenso wie im Fall von anderen Alkaliaktivatoren die Menge hier ausdrücklich auf Werte unter 3 Gew.% beschränkt wird, um das positive Schwindungsverhalten nicht zu verschlechtern.

Insgesamt kann bei dem erfindungsgemäßen hydraulischen Bindemittel auf CaO im Wesentlichen verzichtet werden, sodass die Herstellung des Bindemittels umweltverträglicher wird, da die CO₂ Emission durch den Verzicht auf das Brennen von Kalkstein wesentlich verringert wird. In besonders vorteilhafter Weise kann aber die Mischung zusätzlich Kalkstein und/oder Sande oder Quarze mit der Maßgabe enthalten, dass der Al₂O₃-Gehalt der Mischung ≥ 5 Gew.% ist.

Superverflüssiger bzw. Plastifizierungsmittel können zur Verbesserung der Verarbeitbarkeit und/oder zur Verringerung des Wasser/Zementverhältnisses in konventioneller Weise zudosiert werden, wobei bevorzugt dem Bindemittel zur Reduktion der Wasser/Zementverhältnisses Plastifizierungsmittel und/oder Superverflüssiger in Mengen von 0,1 bis 1 Gew.% bezogen auf die Trockensubstanz zugesetzt ist.

Insgesamt ergibt sich durch die Möglichkeit ohne Verzicht auf die Frühfestigkeit weitere Hochofenschlacke durch von Hochofenschlacke verschiedene Aluminiumsilikate zu ersetzten, die Möglichkeit das Frühschwindungsverhalten zu verbessern und den Wasserbedarf zu verringern. Die Folge ist eine geringere Permeabilität und eine höhere Dauerfestigkeit.

Die Erfindung wird nachfolgend anhand von Ausführungsbeispielen, wie sie in der Tabelle 1 angeführt sind, erläutert. Die Tabelle 1 zeigt gleichzeitig auch die jeweiligen Festigkeitswerte (CS) nach einem Tag, nach zwei Tagen und nach 28 Tagen.

| Beispiel | | 1 | 2 | 3 |
|---|---|---|---|---|
| Hochofenschlacke | % | 41.9 | 42 | 25.5 |
| Flugasche | % | 41.9 | - | 58.65 |
| Andesit | % | - | 42 | |
| Anhydrit | % | 15 | 15 | 15 |
| KOH | % | 0.5 | 0.3 | 0.5 |
| Plastifizierungsmittel | % | 0.7 | 0.7 | 0.7 |
| Wasser/Zement | | 0.26 | 0.29 | 0.29 |
| CS 1 Tag | MPa | 13.2 | 10.9 | - |
| CS 2 Tage | MPa | 27.4 | 23.7 | 16.7 |
| CS 28 Tage | MPa | 97.4 | 61.3 | 46.1 |

In Figur 1 ist das Schwindungsverhalten des erfindungsgemäßen Bindemittels bei zumindest teilweisem Ersatz der Hochofenschlacke durch Flugasche ersichtlich und die resultierende Verbesserung verdeutlicht.

## Patentansprüche

1. Hydraulisches Bindemittel enthaltend Schlacken, Aluminiumsilikate und Kalziumsulfat, wobei Schlacke, insbesondere Hochofenschlacke in Mengen von 7 bis 50 Gew.% sowie von Hochofenschlacke verschiedene Aluminiumsilikate, vorzugsweise Flugasche und natürliche Aluminiumsilikate, vorzugsweise Basalt oder Andesit, in Mengen von 5 Gew.% bis 75 Gew.% mit der Maßgabe, dass die Summe von Schlacke und Aluminiumsilikaten zwischen 82 und 95,9 Gew.% beträgt, und CaSO₄ in Mengen zwischen 4 und 15 Gew.% vorliegt und zusätzlich Alkaliaktivatoren, insbesondere Alkalihydroxide und/oder -karbonate von Na und/oder K in Mengen von 0,1 bis 3 Gew.% eingesetzt sind, **dadurch gekennzeichnet, dass** als Abbindebeschleuniger Portlandzementklinker in Mengen zwischen 0,1 und 5 Gew.% eingesetzt ist.

2. Hydraulisches Bindemittel nach Anspruch 1, **dadurch gekennzeichnet, dass** Hochofenschlacke in Mengen zwischen 20 und 35 Gew.% eingesetzt ist.

3. Hydraulisches Bindemittel nach Anspruch 1 oder 2, **dadurch gekennzeichnet, dass** die Mischung zusätzlich Kalkstein und/oder Quarze mit der Maßgabe enthält, dass der Al₂O₃-Gehalt der Mischung ≥ 5 Gew.% ist.

4. Hydraulisches Bindemittel nach Anspruch 1,2 oder 3, **dadurch gekennzeichnet, dass** Plastifizierungsmittel und/oder Superverflüssiger in Mengen von 0,1 bis 1 Gew.% bezogen auf die Trockensubstanz zugesetzt ist.

## Claims

1. Hydraulic binder containing slags, aluminium-silicates and calcium sulphate, wherein slag, in particular furnace slag, in amounts from 7 to 50% (w/w) as well as aluminium-silicates different from furnace slag, preferably flue-ash and natural aluminium-silicates, preferably basalt or andesite, in amounts of 5 to 75% (w/w) with the requirement that the sum of slag and aluminium-silicates is between 82 and 95,9% (w/w) and CaSO₄ is present in amounts between 4 and 15% (w/w) and that in addition alkali activators, in particular alkali hydroxides and/or - carbonates of Na and/or K are deployed in amounts from 0,1 to 3% (w/w), **characterized in that** portland-cement clinker in amounts between 0,1 and 5% (w/w) is deployed as setting accelerator.

2. Hydraulic binder according to claim 1, **characterized in that** furnace slag is deployed in amounts between 20 and 35% (w/w).

3. Hydraulic binder according to claim 1 or 2, **characterized in that** the mixture additionally contains limestone and/or quartzes with the requirement that the Al₂O₃ content of the mixture is ≥ 5% (w/w).

4. Hydraulic binder according to claim 1,2 or 3, **characterized in that** plastification agent and/or super liquefier in amounts from 0,1 to 1% (w/w) related to the dry substance are added.

## Revendications

1. Liant hydraulique contenant des laitiers, des silicates d'aluminium et du sulfate de calcium, dans lequel le laitier, en particulier un laitier de haut fourneau, est présent dans des quantités de 7 à 50 % en poids, ainsi que des silicates d'aluminium différents du laitier de haut fourneau, de préférence des cendres volantes et des silicates d'aluminium naturels, de préférence du basalte ou de l'andésite, sont présents dans des quantités de 5 % en poids à 75 % en poids, à la condition que la somme du laitier et des silicates d'aluminium soit comprise entre 82 et 95,9 % en poids, et le CaSO₄ est présent dans des quantités comprises entre 4 et 15 % en poids, et on utilise en outre des activateurs alcalins, en particulier des hydroxydes et/ou des carbonates alcalins, de Na et/ou de K, dans des quantités de 0,1 à 3 % en poids, **caractérisé en ce qu'**on utilise en tant qu'accélérateur de prise un clinker Portland dans des quantités de 0,1 à 5 % en poids.

2. Liant hydraulique selon la revendication 1, **caractérisé en ce qu'**on utilise un laitier de haut fourneau dans des quantités allant de 20 à 35 % en poids.

3. Liant hydraulique selon la revendication 1 ou 2, **caractérisé en ce que** le mélange contient en outre du calcaire et/ou des quartz, à la condition que la teneur en Al₂O₃ du mélange soit ≥ 5 % en poids.

4. Liant hydraulique selon la revendication 1, 2 ou 3, **caractérisé en ce que** des plastifiants et/ou des superplastifiants sont ajoutés dans des quantités de 0,1 à 1 % en poids, sur la base de l'extrait sec.
